# EUROPEAN PATENT APPLICATION

(11) **EP 4 636 635 A1**
(43) Date of publication of application: **22.10.2025**
(21) Application number: 23894048.0
(22) Date of filing: 14.12.2023
(51) Int. Cl.: G06F 30/13, G06T 17/00

(54) **THREE-DIMENSIONAL AUTOMATIC DESIGN METHOD AND APPARATUS FOR TRAYS AND BEARERS IN GALLERY, AND MEDIUM AND DEVICE**

(30) Priority: 18.07.2023 CN 202310886402
(71) Applicant: China Nuclear Power Engineering Co., Ltd., Shenzhen, Guangdong 518124 (CN); China Nuclear Power Design Company Ltd. (Shenzhen), Shenzhen, Guangdong 518100 (CN)
(72) Inventor: LIU, Anmin, Shenzhen, Guangdong 518124 (CN); JIA, Wenge, Shenzhen, Guangdong 518124 (CN); ZHOU, Zhigang, Shenzhen, Guangdong 518124 (CN); WANG, Mingkai, Shenzhen, Guangdong 518124 (CN); XU, Pingtao, Shenzhen, Guangdong 518124 (CN); MAO, Feng, Shenzhen, Guangdong 518124 (CN); AI, Yan, Shenzhen, Guangdong 518124 (CN); PENG, Jin, Shenzhen, Guangdong 518124 (CN)
(74) Representative: Westphal, Mussgnug & Partner, Patentanwälte mbB
(86) International application number: PCT/CN2023/138952
(87) International publication number: WO 2024/109959

(57) **Abstract**

The present invention relates to a three-dimensional automatic design method, and apparatus for cable trays and supports in a gallery, and a medium and a device. The method comprises the following steps: S20, determining cable tray layout design information of gallery cross-section. S30, obtaining gallery civil engineering model data, and automatically generating and displaying a cable tray routing based on the gallery civil engineering model data and the cable tray layout design information of gallery cross-section. And S40, automatically generating a three-dimensional model of electrical cable tray of the gallery according to the cable tray layout design information of gallery cross-section and the cable tray routing. And S50, automatically generating a three-dimensional model of electrical support of the gallery based on the cable tray layout design information of gallery cross-section and the three-dimensional model of electrical cable tray. S60: Automatically naming and storing the three-dimensional model of electrical cable tray and the three-dimensional model of electrical support according to a first preset naming rule. The three-dimensional design method can greatly improve the three-dimensional design efficiency of the gallery cable tray and the support, reduce human errors and improve the design quality.

## Description

### TECHNICAL FIELD

The invention relates to the technical field of computer-aided design, in particular to a three-dimensional automatic design method and apparatus for electrical cable trays and supports in gallery, and a medium and a device.

### DESCRIPTION OF RELATED ART

The nuclear power plant connects the process system and electrical instrument system in each plant through various types of galleries (underground passages connecting nuclear power plants) and piping in the galleries, which realizes the interconnection of process media, energy and communication in each plant room and ensures the safe and stable operation of the nuclear power plant. It can be said that the gallery of nuclear power plant is an underground cable tray connecting the large functional plant of nuclear power plant, and it is one of the very important components of nuclear power plants. With the rapid development of information technology, three-dimensional digital design has been carried out in various large-scale projects, and three-dimensional layout design has been implemented of the gallery of nuclear power plant. The three-dimensional model generally refers to the three-dimensional virtual factory model established on the factory design software platform. However, the traditional manual modeling mode is used in the three-dimensional modeling of the electrical cable tray (cable tray for laying cables) and the support (steel structure for supporting the cable tray), which is not only cumbersome in the three-dimensional modeling process, but also inefficient in modeling. With the simultaneous development of multiple projects, the gallery design of different projects is quite different, and the reusability is low, which leads to the superposition of three-dimensional design workload of the electrical cable tray and support of the gallery, coupled with the shortage of design human resources, the existing three-dimensional design mode is difficult to meet the needs of multi-project design. Therefore, there is an urgent need to improve the automation of the three-dimensional design of the electrical cable tray and support of the gallery and improve the design efficiency.

The existing three-dimensional design scheme for electrical cable trays and supports of the gallery adopts the traditional manual three-dimensional modeling approach, which is complicated in the three-dimensional modeling design process and low in design efficiency. A design flow of that prior art is as follow:
1. First, in the Cable Trays module (cable duct module/cable tray module) in the PDMS (Plant Design Management system, factory three-dimensional design management system), manually create a cable tray hierarchy for the storage of the cable tray model. The name of cable tray layer shall be manually named according to the standard specifications.
2. Manually select the level and width of the cable tray to be created according to the cable tray attributes to be modeled, such as cable classification, voltage level, cable tray width, etc.;
3. Manually locate the head-to-tail coordinates of the cable tray, or set the connection relationship, and extract the coordinates values of the connected items as the head-to-tail coordinates of the cable tray;
4. Based on the cable tray layout design routing, create and position elbows, connecting plates, tees, and other components according to predefined rules. Finally, populate the straight sections to complete the three-dimensional layout design of a single electrical cable tray layer. Electrical cable trays in galleries are typically arranged across multiple layers. To complete the whole design, repeat the modeling process or duplicate existing models while modifying their names and attributes.
5. Carry out three-dimensional design of the support after the cable tray layout of the gallery is completed. In the PDMS support and hanger design module, set the storage position of the support, manually select the type of the electrical standard support through the tool, and determine the corresponding standard support template and call program.
6. Position the support through a tool, manually select the support steel structure to position the wall or floor, and determine the key dimensions of the support according to the support type, positioning data, and wall or floor spacing. The wall or floor spacing also can be manually measured and manually enter the critical dimensions of the support.
7. Add corresponding corbels according to the number of cable tray layers to be supported by the support, and automatically update the steel structure dimension of the support in combination with the number and position of corbels. If the steel structure model needs to be adjusted, the steel structure model selection can be completed through the designated button. After confirming that the creation is correct, click Finish to complete the three-dimensional modeling of a single support.

The existing three-dimensional design of electrical cable trays and supports of the gallery has the following defects:
1. The whole three-dimensional design process of electrical cable trays and supports needs to be completed manually, with low design efficiency and more repetitive work.
2. The three-dimensional modeling design process of electrical cable trays and supports of the gallery is complicated, and the manual modeling may affect the efficiency and quality due to some mistakes. Because of the slope of the gallery, and the slope of some adjacent sections is different, 50mm expansion joints need to be set between the straight sections, the corner section needs to be set horizontally, and the layout design of the rising lower layer section, three-way section and four-way section is more complex. These design rules will lead to more difficulties in three-dimensional modeling of electrical cable tray and support of the gallery. However, the whole process of manual modeling will further affect the design quality problems caused by human errors.
3. The designer is required to have high modeling experience and master the three-dimensional modeling method for electrical cable tray and support using PDMS, so the controllability and reusability of the traditional design method are low.

### BRIEF SUMMARY OF THE INVENTION

The technical problem to be solved by the present invention is to provide three-dimensional automatic design method and apparatus for electrical cable trays and supports in gallery, and a medium and a device.

The technical solution adopted by the present invention to solve the technical problem is: a three-dimensional automatic design method for electrical cable trays and supports in gallery , comprising the following steps:
S20, determining cable tray layout design information of gallery cross-section;
S30, obtaining gallery civil engineering model data, and automatically generating and displaying a cable tray routing based on the gallery civil engineering model data and the cable tray layout design information of gallery cross-section;
S40, automatically generating a three-dimensional model of electrical cable tray of the gallery according to the cable tray layout design information of gallery cross-section and the cable tray routing;
S50, automatically generating a three-dimensional model of electrical support of the gallery based on the cable tray layout design information of gallery cross-section and the three-dimensional model of electrical cable tray;
S60, automatically naming and storing the three-dimensional model of electrical cable tray and the three-dimensional model of electrical support according to a first preset naming rule.

Further, in the three-dimensional automatic design method for electrical cable trays and supports in gallery according to the present invention, before step S20, the method further comprises:
S10, obtaining and displaying a gallery civil engineering model of nuclear power plant by using a PDMS modeling platform.

Further, in the three-dimensional automatic design method for electrical cable trays and supports in gallery of the present invention, the step S20 comprises:
Acquiring the cable tray layout design information of gallery cross-section according to a preset electrical cable tray layout rule of the gallery.

Further, in the three-dimensional automatic design method for electrical cable trays and supports in gallery of the present invention, the step S20 comprises:
Receiving the cable tray layout design information of gallery cross-section input by an operator after manually analysis of the electrical cable tray layout rule of the gallery.

Further, in the three-dimensional automatic design method for electrical cable trays and supports in gallery of the present invention, the cable tray layout design information of gallery cross-section comprises the number of cable tray layers and/or the cable tray attribute parameters of each cable tray layer, wherein the cable tray attribute parameters comprise at least one of cable classification, voltage level, cable tray width, and cable tray positioning information.

Further, in the three-dimensional automatic design method for electrical cable trays and supports in gallery of the present invention, comprises: determining cable tray classification and cable tray name according to the cable tray attribute parameters;
Wherein the cable tray classification is used to associate a component library with the three-dimensional mode of electrical cable tray, and the component library has cable tray components for building the three-dimensional model of electrical cable tray.

Further, in the three-dimensional automatic design method for electrical cable trays and supports in gallery of the present invention, the step S40 comprises:
S41, receiving a first confirmation generation instruction input by an operator, and automatically generating a three-dimensional model of electrical cable tray of the whole gallery according to the cable tray routing and the cable tray classification.

Further, in the three-dimensional automatic design method for electrical cable trays and supports in gallery of the present invention, the step S30 comprises:
S31, searching for the gallery civil engineering model data pre-stored in the SQL database corresponding to the gallery according to the REF number of a manually selected positioning wall, extracting the gallery civil engineering model data, and automatically generating and displaying the cable tray routing of each cable tray layer of the gallery according to the gallery civil engineering model data and the cable tray positioning information. The cable tray routing is a virtual path constructed through an auxiliary centerline in a PDMS modeling platform.

Wherein, the gallery civil engineering model data comprises at least one of unit number, plant, layer, wall REF number, starting clearance center coordinates, orientation, slope, length, ending clearance center coordinates, civil engineering standard section type, and gallery cross-section dimension parameter set; the REF number is a unique item identifier pre-stored in the PDMS modeling platform.

Further, in the three-dimensional automatic design method for electrical cable trays and supports in gallery of the present invention, the step S30 comprises:
S32, manually capturing the key point coordinates of the gallery civil engineering and/or manually inputting the values of key point coordinate of the gallery civil engineering model, automatically generating and displaying a cable tray routing of each cable tray layer of the gallery according to key point coordinates and the cable tray positioning information, wherein the cable tray routing is a virtual path constructed through an auxiliary centerline in a PDMS modeling platform.

Further, in the three-dimensional automatic design method for electrical cable trays and supports in gallery of the present invention, the step of automatically generating and displaying a cable tray routing of each cable tray layer of the gallery according to the key point coordinates and the cable tray positioning information further comprises:
Automatically determining center point coordinates of each cable tray layer by using the key point coordinates and the cable tray positioning information, and generating and displaying the cable tray routing of each cable tray layer of the gallery according to the center point coordinates.

Further, in the three-dimensional automatic design method for electrical cable trays and supports in gallery of the present invention, the step S50 comprises:
S51. determining support type and support structure dimension according to the cable tray layout design information of gallery cross-section;
S52, determining support quantity and/or support positioning positions of each support type according to the three-dimensional model of electrical cable tray;
S53, in the three-dimensional model of electrical cable tray, according to a second confirmation generation instruction input by an operator, deploying all required supports along the cable tray routing to automatically generate a three-dimensional model of electrical support of the whole gallery.

Further, in the three-dimensional automatic design method for electrical cable trays and supports in gallery of the present invention, a gallery comprises a plurality of gallery segments, and the method further comprises the steps of:
S70, when the layout rules of electrical cable tray in a gallery segment are not uniform, determining and displaying the cable tray routing according to the coordinates values of at least one of starting point, end point and turning point manually selected of each cable tray layer; Wherein the coordinates value of the turning point is obtained by manually shifting a preset distance to the center position of the cable tray and/or is obtained by manual input;
S80, obtaining the cable tray layout design information and cable tray classification of the starting point to be used as the cable tray attribute of the gallery segment and the cable tray naming basis.

In addition, the present invention also provides a three-dimensional design apparatus for electrical cable trays and supports in gallery, comprising:
A gallery cross-section cable tray layout design module is configured to determine cable tray layout design information of gallery cross-section;
A cable tray routing layout design module is configured to obtain gallery civil engineering model data, and automatically generate and display the cable tray routing based on the gallery civil engineering model data and the cable tray layout design information of gallery cross-section;
A three-dimensional model generation module is configured to automatically generate an three-dimensional model of electrical cable tray of the gallery according to the cable tray layout design information of gallery cross-section and the cable tray routing, automatically generate an three-dimensional model of electrical support of the gallery based on the cable tray layout design information of gallery cross-section and the three-dimensional model of electrical cable tray, and automatically name and store the three-dimensional model of electrical cable tray and the three-dimensional model of electrical support according to a first preset naming rule,.

In addition, the present invention further provides a computer readable storage medium, in which a computer program is stored, and the computer program is suitable for being loaded by a processor, to execute the steps of the three-dimensional automatic design method for electrical cable trays and supports in gallery.

In addition, the present invention also provides a computer device, which comprises a memory and a processor, wherein the memory stores a computer program, and the processor executes the steps of the three-dimensional automatic design method for electrical cable trays and supports in gallery by calling the computer program stored in the memory.

The three-dimensional automatic design method and apparatus for electrical cable trays and supports in gallery, and a medium and a device of the invention have the following beneficial effects that the invention can automatically generate the cable tray routing according to the gallery civil engineering model data and the cable tray layout design information of gallery cross-section, and further automatically generate the three-dimensional model of electrical cable tray and the three-dimensional model of electrical support of the gallery, Then automatic naming and storage of the models are completed respectively, so that the three-dimensional design efficiency of the gallery cable tray and support is greatly improved, the human error is reduced, and the design quality is improved.

### BRIEF DESCRIPTION OF THE SEVERAL VIEWS OF THE DRAWINGS

The present invention will be further described with reference to the accompanying drawings and embodiments, in which:
FIG. 1 is a flowchart of a three-dimensional automatic design method for electrical cable trays and supports in gallery according to an embodiment of the present invention;
FIG. 2 is a schematic diagram of the cable tray layout design of gallery cross-section provided by the present invention;
FIG. 3 is a schematic diagram of the interface of the cable tray layout design information of gallery cross-section provided by the present invention;
FIG. 4 is a visual interactive interface of a cable tray routing layout design provided by the present invention;
FIG. 5 is a visual interactive interface of a cable tray routing layout design provided by the present invention;
FIG. 6 is a flowchart of the procedure of some embodiments of the three-dimensional automatic design method for electrical cable trays and supports in gallery of the present invention;
FIG. 7 is a flowchart of the procedure of some embodiments of the three-dimensional automatic design method for electrical cable trays and supports in gallery of the present invention;
FIG. 8 is a flowchart of the procedure of some embodiments of the three-dimensional automatic design method for electrical cable trays and supports in gallery of the present invention;
FIG. 9 is an effect diagram for automatically generating a three-dimensional model of electrical cable tray according to the present invention;
FIG. 10 is a flowchart of the procedure of some embodiments of three-dimensional automatic design method for electrical cable trays and supports in gallery according to the present invention;
FIG. 11 is a flowchart of the procedure of some embodiments of the three-dimensional automatic design method for electrical cable trays and supports in gallery of the present invention;
FIG. 12 is a structural diagram of the wall-mounted support in the first support type provided by the present invention;
FIG. 13 is a structural diagram of the floor-mounted support in the first support type provided by the present invention;
FIG. 14 is a structural diagram of a second support type provided by the present invention;
FIG. 15 is a partial rendering of the three-dimensional model of electrical support provided by the present invention;
FIG. 16 is a partial rendering of the three-dimensional model of electrical cable tray and the three-dimensional model of electrical support provided by the present invention;
FIG. 17 is a flowchart of the procedure of some embodiments of three-dimensional automatic design method for electrical cable trays and supports in gallery according to the present invention;
FIG. 18 is a visual interactive interface of the cable tray routing layout design of a special segment of gallery provided by the present invention;
FIG. 19 is a schematic diagram of tee positioning provided by the present invention;
FIG. 20 is a workflow diagram of an embodiment of the three-dimensional design apparatus for electrical cable trays and supports in gallery of the present invention.

### DETAILED DESCRIPTION OF THE INVENTION

For a clearer understanding of the technical features, objects, and effects of the present invention, embodiments of the present invention will now be described in detail with reference to the accompanying drawings.

In the following description, for purposes of explanation and not limitation, specific details are set forth such as the particular system architecture, techniques, etc., in order to provide a thorough understanding of embodiments of the present invention. However, it will be apparent to one skilled in the art that the present invention may be practiced in other embodiments without these specific details. In other instances, detailed descriptions of well-known systems, devices, circuits, and methods are omitted so as not to obscure the description of the present invention with unnecessary detail.

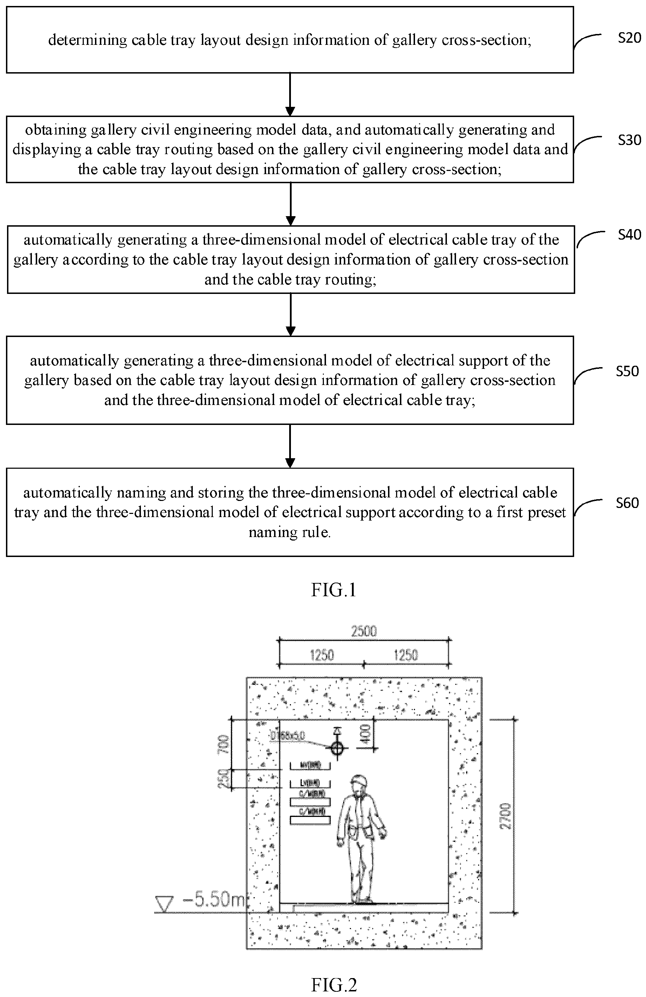

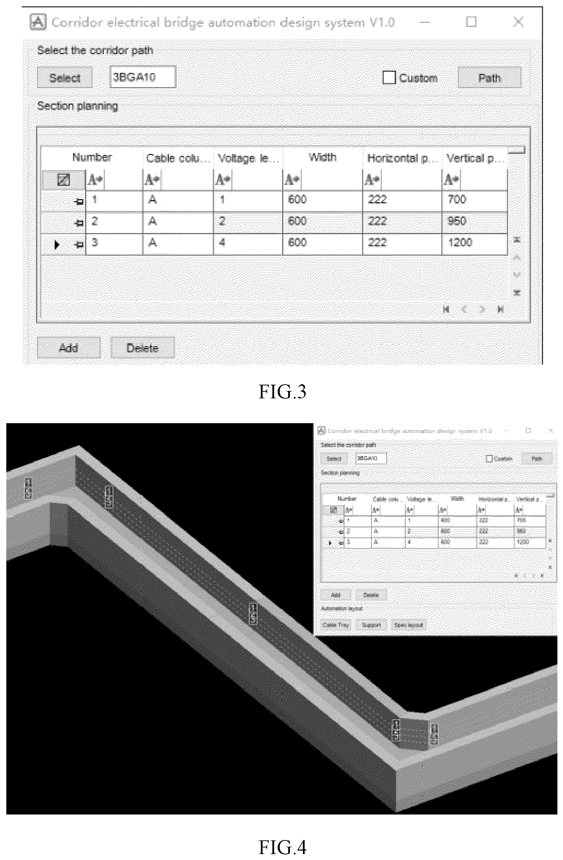

In a preferred embodiment, referring to FIG. 1, the three-dimensional automatic design method for electrical cable trays and supports in gallery of this embodiment includes the following steps:
S20. determining cable tray layout design information of gallery cross-section. Alternatively, there are two ways to determine the cable tray layout design information of gallery cross-section. First, the cable tray layout design information of gallery cross-section can be automatically obtained according to an electrical cable tray layout rule of gallery preset in the system or three-dimensional design platform. For example, the electrical cable tray layout rule of gallery can be selected in various ways such as manual input. Second, it can receive the cable tray layout design information of gallery cross-section input by a operator after manually analyzing the electrical cable tray layout rule of gallery, that is, the cable tray layout design information of gallery cross-section can be determined by manual analysis, and then input through the man-machine interactive interface of the three-dimensional design platform/software as shown in FIG.3, and then the system will make specific analysis on the relevant data/information. Get the attributes that meet the needs of cable tray modeling, such as cable tray classification, naming, etc. That is to say, the man-machine interactive interface of the three-dimensional design platform/software as shown in FIG. 3 is an interface between the three-dimensional modeling software and the designer, which is used to determine which gallery and how to arrange the corresponding cable tray of the gallery, including how many layers to arrange, the design width, height and cable specification of each cable tray layer, whether it is closed or open, etc. These data are input so that the design software knows how the layout of the cable tray in the whole gallery cross-section is designed. Then, according to these input data, the cable tray classification is automatically determined and each cable tray layer is automatically named.

Specifically, the cable tray layout design information of gallery cross-section is the layout of the cable tray on the gallery cross-section, including the number of cable tray layers, the cable tray attribute parameters of each cable tray layer, positioning, etc. The cable tray attribute parameters include but are not limited to cable classification, voltage level, cable tray width, cable tray positioning information, etc. The cable tray positioning information includes a cable tray horizontal positioning parameter and a cable tray vertical positioning parameter, wherein the cable tray horizontal positioning parameter includes a horizontal distance between the cable tray and a wall or a top plate, and the cable tray vertical positioning parameter includes a vertical distance between the cable tray and the wall or the top plate. These attributes have been written into the software for the designer to select. For example, A/B/C/D/N options are provided for the cable classification parameter setting, 1/2/3/4/5/6 options are provided for the voltage level parameter, and 100/200/300/400/500/600 options are available for the cable tray width. Cable tray positioning parameters include horizontal positioning and vertical positioning. The horizontal positioning is 222 by default, and the vertical positioning is 700 by default. The values can be adjusted according to specific requirements.

The electrical cable tray layout rule of the gallery mainly refers to the relative position (horizontal and vertical distance) between the cable tray and the wall or top plate of the gallery. In a gallery, the cable tray is generally arranged against the wall. After the relative position of each cable tray layer determined, it is unchanged in the whole gallery, and the relative distance is given by the design. After the layout of the cable tray of the gallery cross-section is determined, the cable tray classification and cable tray name can be automatically determined, so that the subsequent three-dimensional model of electrical cable tray can be constructed and stored.

For example, it can be seen from FIG. 2 that the number of cable tray layers in the figure is 4, the upper two layers are open-covered cable trays, the lower two layers are covered cable trays, the arrangement distance between the upper two cable tray layers is 250, the vertical distance of the top plate of the cable tray is 700, -5.5m is the elevation of the bottom surface of the gallery, and so on. It can be seen from FIG. 3 that the gallery numbered 3BGA10 is selected as the design object, and the cable classification of the first cable tray layer is A, the voltage level is 1, the cable tray width is 600, the horizontal positioning is 222, and the vertical positioning is 700; The cable classification of the second cable tray layer is A, the voltage level is 2, the cable tray width is 600, the horizontal positioning is 222, and the vertical positioning is 960; and so on.

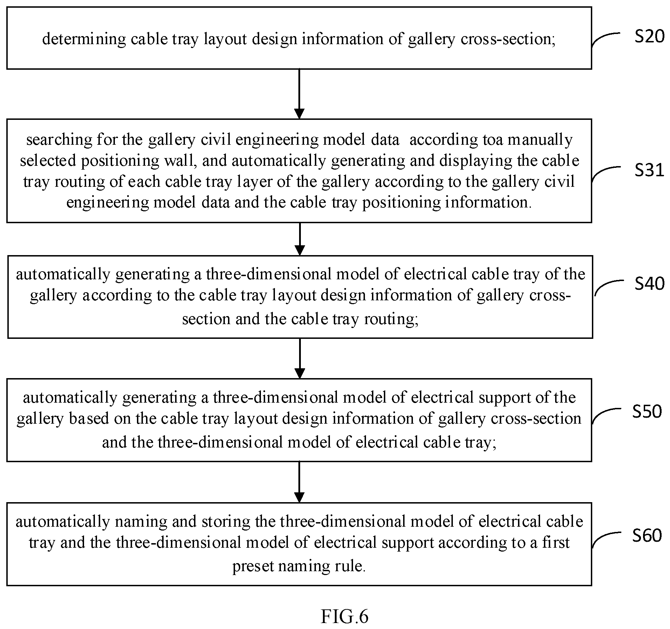

S30: obtaining gallery civil engineering model data, and automatically generating and displaying a cable tray routing based on the gallery civil engineering model data and the cable tray layout design information of gallery cross-section. Alternatively, the present invention provides two ways to automatically generate the cable tray routing based on the cable tray layout design information of gallery cross-section:
With reference to FIG. 4 and FIG. 6, the first way is to automatically extract the gallery civil engineering model data to complete the cable tray layout design routing planning: S31, extracting the gallery civil engineering model data according to the manually selected positioning wall, and automatically generating and displaying the cable tray routing of each cable tray layer of the gallery according to the gallery civil engineering model data and the cable tray positioning information. Specifically, according to the REF number of a manually selected positioning wall, the gallery civil engineering model data of the corresponding gallery pre-stored in the SQL database is searched, the gallery civil engineering model data is extracted, and according to the gallery civil engineering model data and the cable tray positioning information, the cable tray routing of each cable tray layer of the gallery is automatically generated and displayed. The gallery civil engineering model data includes at least one of unit number, plant, layer position, wall REF number, starting clear-space center coordinates, orientation, slope, length, ending clear-space center coordinates, civil standard section type and gallery cross-section dimension parameter set. The REF number is a unique item identifier pre-stored in the PDMS modeling platform.

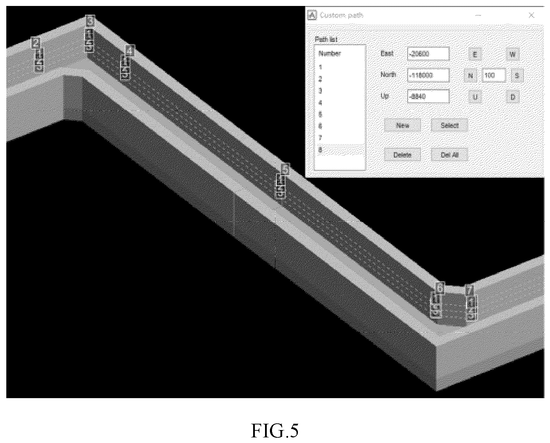

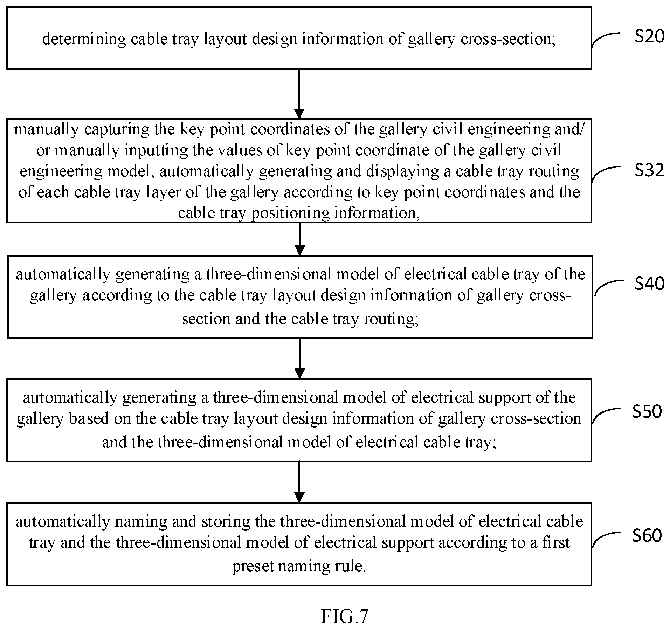

Referring to FIG. 5 and FIG. 7, the second way is to complete the cable tray layout design path planning by an operator-defined path: S32. automatically generating and displaying a cable tray routing of each cable tray layer of the gallery according to key point coordinates and the cable tray positioning information by manually capturing the key point coordinates of the gallery civil engineering and/or manually inputting the key point coordinates value, Specifically, the step of automatically generating and displaying the cable tray routing of each cable tray layer of the gallery according to the key point coordinates and the cable tray positioning information also includes the steps of automatically determining the center point coordinates of each cable tray layer by using the key point coordinates and the cable tray positioning information, and automatically generating and displaying the cable tray routing of each layer of the gallery according to the center point coordinates. This custom path method can be extended to other plant cable tray layout design work, and can more intuitively experience the three-dimensional design process of gallery electrical cable tray routing.

In this embodiment, the cable tray routing is a virtual path constructed through the auxiliary centerline in the PDMS modeling platform, which can effectively detect the accuracy of the cable tray layout design path.

S40, automatically generating a three-dimensional model of electrical cable tray of the gallery according to the cable tray layout design information of gallery cross-section and the cable tray routing.

Preferably, step S40 includes: automatically generating a three-dimensional model of electrical cable tray of the whole gallery according to the cable tray layout design information of gallery cross-section and the cable tray routing. It should be noted that the cable tray classification and cable tray name are determined according to the cable tray layout design information of gallery cross-section or its cable tray attribute parameters. The cable tray classification is used to associate the component library with the three-dimensional model of electrical cable tray, and the component library has cable tray components used to build the three-dimensional model of electrical cable tray. The cable tray components mainly include 90-degree left elbows, 90-degree right elbows, upper and lower connecting pieces, left and right connecting pieces, etc. The cable tray components can refer to the prior art, and are not specifically limited here.

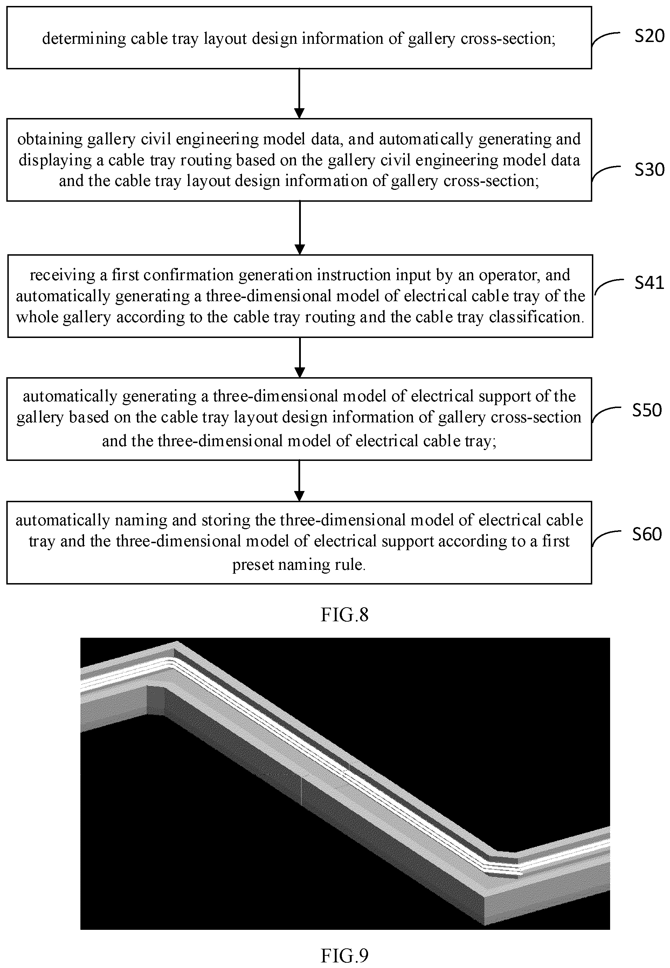

In some embodiments, referring to FIG. 8 and FIG. 9, the step S40 includes: S41, receiving a first confirmation generation instruction input by an operator, and automatically generating a three-dimensional model of electrical cable tray of the whole gallery according to the cable tray routing and the cable tray classification. Specifically, step S41 includes receiving a first confirmation generation instruction input by an operator, determining cable tray components required for the cable tray according to the cable tray routing and the cable tray classification, and laying and connecting all the cable tray components along the cable tray routing to automatically generate a three-dimensional model of electrical cable tray of the whole gallery.

S50, automatically generating a three-dimensional model of electrical support of the gallery based on the cable tray layout design information of gallery cross-section and the three-dimensional model of electrical cable tray.

S60, automatically naming and storing the three-dimensional model of electrical cable tray and the three-dimensional model of electrical support according to a first preset naming rule.

This embodiment can automatically generate the cable tray routing according to the gallery civil engineering model data and the cable tray layout design information of gallery cross-section, and then automatically generate the three-dimensional model of electrical cable tray and the three-dimensional model of electrical support of the gallery, and complete the automatic naming and storing of the models respectively, so as to realize the automatic and batch three-dimensional design of electrical cable tray and support. Thereby greatly improving the three-dimensional design efficiency of the gallery cable tray and the support, reducing human errors and improving the design quality.

In the present invention, the naming of the model is very important. Only through the name, it can be known which plant building and which functional cable tray. The name of the cable tray should also be specified in the subsequent construction drawings. The model naming is specified by the procedure, as shown in Table 1. The naming of PIPE is the naming rule of a cable tray layer , and the naming of BRAN is the naming after a cable tray layer is divided into multiple segments:

### 1) PIPE Naming:

Coding rule of main pallet: (unit number + plant code) + (layer) + (sequence code) + C + (electrical column) + (cable tray classification) + (voltage level), i.e., N1 + A1A2A3 + C1C2 + C3C4 + C + A4 + A5 + N2, for example, 3BRX0164CDA3, as shown in Table 1.

**Table 1**

| Identification | N1 | A1A2A3 | C1C2 | C3C4 | C | A4 | A5 | N2 |
|---|---|---|---|---|---|---|---|---|
| | unit number | plant code | layer | sequence code | Cable Tray Identification | electrical column | cable tray classification | voltage level |
| example | **3** | **BRX** | **01** | **64** | **C** | **D** | **A** | **3** |

### 2) BRAN Naming:

Main cable tray coding rule: PIPE name + cable tray segment (A7) + (- (multiple hyphens), where the number of hyphens shall be such that the code has a fixed length of 16 characters. That is, N1 + A1A2A3 + C1C2 + C3C4 + C + A4 + A5 + N2 + A7 +-3BRX0164CDA3A----.

On the basis of the above exemplary cable tray naming rule, a first preset naming rule is established, and the automatic naming and storage of the three-dimensional model of electrical cable tray and the three-dimensional model of electrical support are completed according to the first preset naming rule.

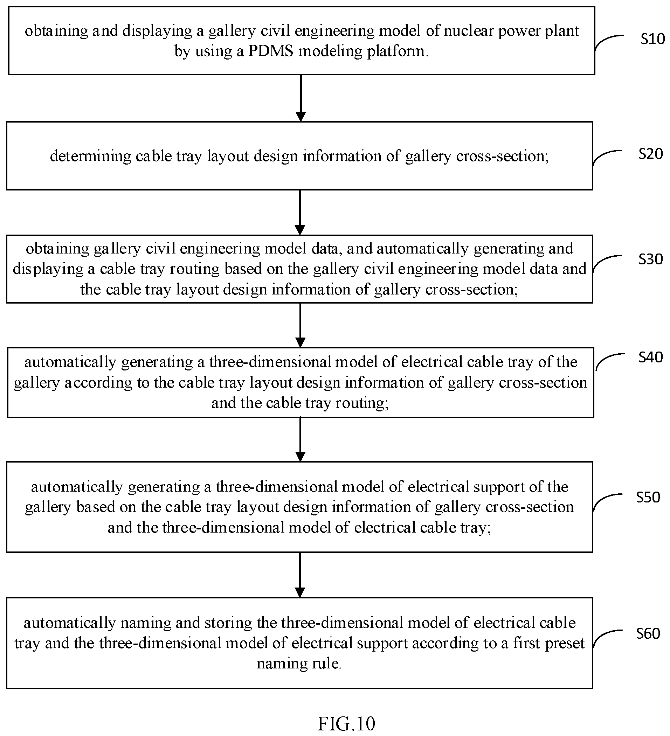

In some embodiments, referring to FIG. 10, before step S20, the method may further include: S10, obtaining and displaying a gallery civil model of nuclear power plant by using a PDMS modeling platform.

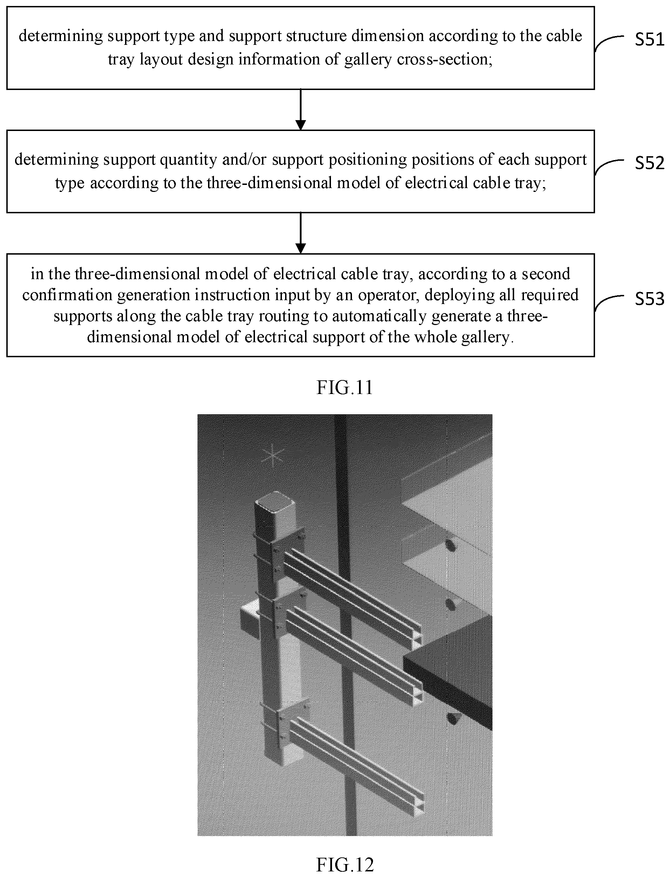

In some embodiments, referring to FIG. 11, step S50 includes:
S51, determining support type and support structure dimension according to the cable tray arrangement design information of gallery cross-section and/or the electrical support layout rule.

S52, determining the number of supports and/or the positioning positions of the supports of each support type according to the cable tray model. Alternatively, the support positioning position may also include support spacing, or precise support positioning position may be obtained by determining the support spacing.

S53, in the three-dimensional model of electrical cable tray, according to a second confirmation generation instruction input by an operator, deploy all the required supports along the cable tray routing to automatically generate a three-dimensional model of electrical support of the whole gallery.

Specifically, after the layout design of the three-dimensional model of electrical cable tray of the gallery is completed, the three-dimensional design of support is required. The support of cable tray is mainly composed of steel structure and corbel. The number of corbel is determined according to the number of cable tray layers. The steel structure is the component supporting the corbel and connecting with the civil engineering. Based on the cable tray routing and combined with corridor cross-section layout data, the system automatically analyzes the type, quantity, and positioning of supports according to an electrical support layout rule. By integrating the support type and cross-section layout data, it automatically determines the structural dimensions of supports. Finally, it enables one-click batch generation of three-dimensional models of electrical supports for the whole corridor, automatically naming and storing the support model.

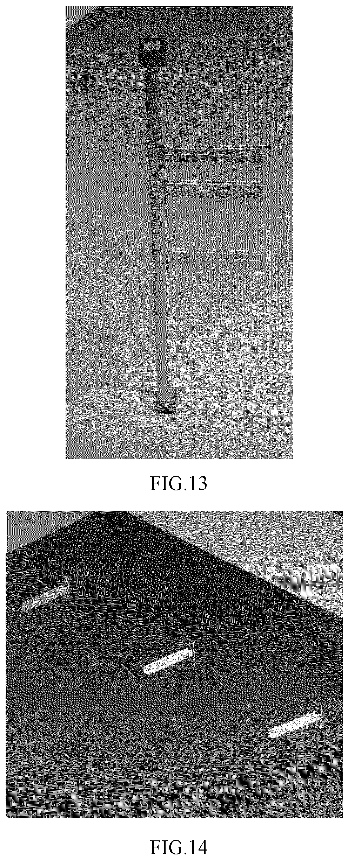

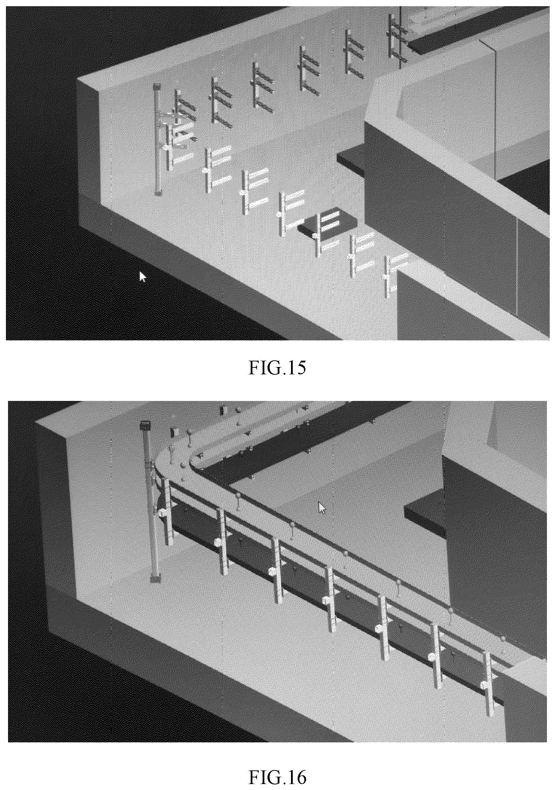

Optionally, as shown in FIGs. 12 to 16, the support type includes a first support type consisting of a steel structure and at least one layer of corbels, and a second support type consisting of a single layer of corbels. The first support type includes, but is not limited to, supports for rooted side walls, supports for rooted floors, and supports for rooted ceilings, among others. The steel structure is the component that supports the corbel and is connected with the civil engineering of the gallery. The length of square steel and the number of corbels of the support are determined according to the number of cable tray layers. The length of steel for the support of the root floor and ceiling is generally determined automatically according to the civil engineering data, and most of them are arranged at 90 degree turns. According to the electrical support layout rules, when the cable tray spacing-vertical distance is relatively large, the system will automatically divide into two supports, and at this time, the second support type composed of single layer corbel will be used. Typically, the first support type is typically provided with one support every 1.5 M and one support every 350 MM at the interface. The supports of the second support type may be arranged one by one at a distance of about 1M, which is determined according to specific requirements and specific arrangement rules, and is not specifically limited here.

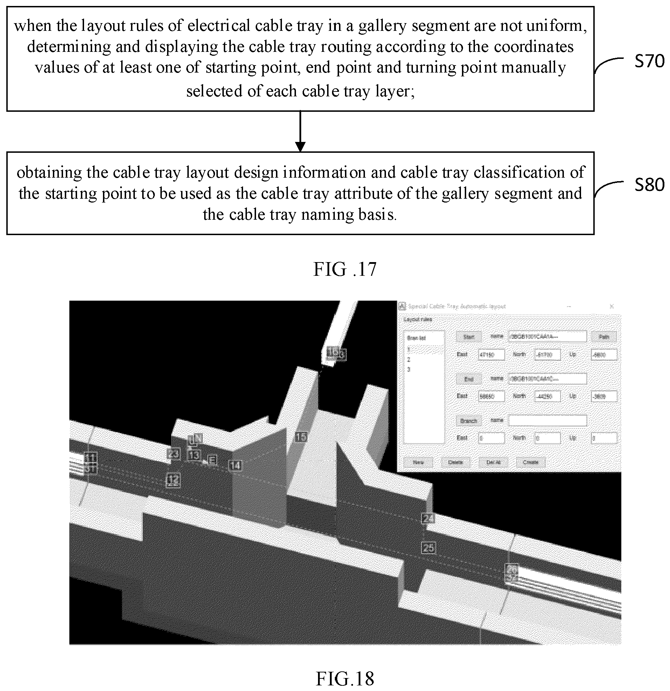

In some embodiments, a gallery includes a plurality of gallery segments, and the method further includes the steps of:
S70, When the layout rules of electric cable trays in a gallery segment are not uniform, determining and displaying the cable tray routing according to the coordinates values of at least one of a starting point, an end point and a turning point manually selected of each cable tray layer .Wherein the coordinates value of the turning points is obtained by manually shifting a preset distance to the center position of the cable tray and/or is obtained by manual input. Illustratively, as shown in FIG. 17, U, N, E are software coordinates system orientations, e.g., U is UP, N is North, and E is East. In the complex section, the turning point on the center line of each cable tray layer is manually selected. Basically, after the turning point of the wall is selected, it is offset to the center of the cable tray for a certain distance. The coordinates of these points are stored in the system and automatically displayed in the interface with labels. The first digit of the point labeling rule represents a cable tray layer, 1 is not necessarily the first layer, and the latter digits are labeled in order from 1.For example, 11 is the starting point and 16 is the end point.

Based on the above embodiment, with reference to FIG. 18, the method further includes the steps of:
S80, Obtaining cable tray layout design information and cable tray classification of the starting point to be used as the cable tray attribute of the gallery segment and cable tray naming basis.

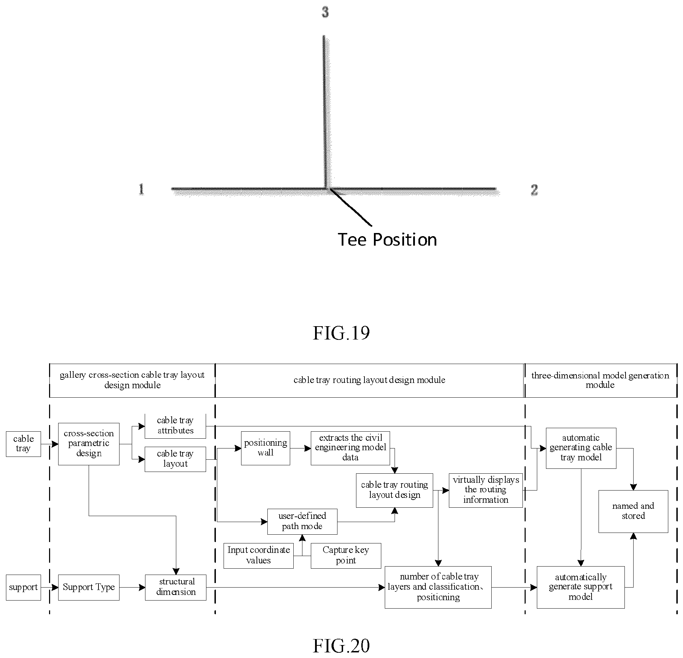

Specifically, due to the special and complex civil structure model of the gallery, the layout rules of each cable tray layer are not uniform, and the user-defined path method provided above based on the cable tray layout design information of gallery cross-section cannot be directly used, but it is necessary to design a user-defined path for each cable tray layer. The classification and attribute of the cable tray automatically extracted based on the attribute of the connecting cable tray connected the cable tray starting point as the current cable tray design information. The three-dimensional modeling, naming, storing of the cable tray are automatically completed and the connection information of the cable tray model is automatically set through the path and cable tray design information. If the tee components need to be arranged, the branch point shall be selected, and the tee position shall be automatically identified and located in combination with the coordinates of the branch point and the cable tray routing. For example, as shown in FIG.19, 1-2 in the figure is the path of a cable tray layer, and 3 is the selected branch point. The system judges whether there is a branch point. If there is a branch point, the coordinates of point 3 is used to make a vertical line to 1-2 (the vertical line is not displayed on the software). The intersection point is the coordinates of the tee, which is configured to the positioning of the tee.

It should be noted that the manually selected key point is the upper edge point of the wall, and the system will automatically determine the center point coordinates of each cable tray layer according to the selected key point coordinates and the horizontal and vertical distances defined by the section layout (offset by the key point in the horizontal and vertical orientations).A virtual cable tray routing (cable tray routing centerline) is generated according to the center point coordinates. The turning point manually selected for the special complex section is generally the upper edge point of the wall. Because there is no uniform layout rule, the horizontal and vertical distances defined by the section layout are not used. It is necessary to manually offset the specified distance to the center of the cable tray, or manually input the coordinate values. The label of the key point in the figure is generally composed of two digits. The first digit is 1, which does not necessarily mean the first layer. It is to see which cable tray layer is constructed first. This cable tray layer is displayed on the system first and sorted first.

This embodiment can automatically generate the cable tray routing according to the gallery civil engineering model data and the cable tray layout design information of gallery cross-section, and then automatically generate the three-dimensional model of electric cable tray and the three-dimensional model of electric support of the gallery, and complete the automatic naming and storing of the model respectively, so as to realize the automatic and batch three-dimensional design of the electric cable tray and support. Thereby greatly improving the three-dimensional design efficiency of the gallery cable tray and the support, reducing human errors and improving the design quality.

In another preferred embodiment, the three-dimensional automatic design apparatus for electrical cable trays and supports in gallery of this embodiment includes:
A gallery cross-section cable tray layout design module, which is configured to determine the cable tray layout design information of gallery cross-section. The module mainly realizes the parametric design of the electrical cable tray in the standard cross-section of the gallery, determines five design parameters such as cable classification, voltage level, cable tray width, horizontal positioning and vertical positioning by analyzing the electrical cable tray layout rules and the cable tray attributes of the gallery, and then defines the number of cable tray layers to be designed to determine the cable tray layout design of the cross-section of the gallery. By setting the gallery cross-section information, the number of cable tray layers for the gallery can be obtained. The cable tray classification and naming of each cable tray layer can be determined according to the design parameters such as cable classification, voltage level, cable tray width, etc. The cable tray classification is a code of a certain type of cable trays. Cable tray positioning information is completed by horizontal positioning and vertical positioning parameters.

A cable tray routing layout design module, which is configured to obtain gallery civil engineering model data, and automatically generate and display the cable tray routing based on the gallery civil engineering model data and the cable tray layout design information of gallery cross-section.

A three-dimensional model generation module is configured to automatically generate a three-dimensional model of electrical cable tray of the gallery according to the cable tray layout design information of gallery cross-section and the cable tray routing, automatically generate a three-dimensional model of electrical support of the gallery based on the cable tray layout design information of gallery cross-section and the three-dimensional model of electrical cable tray, and, automatically name and store the three-dimensional model of electrical cable tray and the three-dimensional model of electrical support according to a first preset naming rule.

Fig. 20 is a flowchart showing the operation principle of the present invention. Firstly, the three-dimensional model of electrical cable tray of the gallery is designed, and the gallery cross-section layout design, the cable tray routing layout design and the automatic generation of the three-dimensional model are sequentially carried out in the cable tray design. The gallery cross-section layout design is realized through cross-section parametric design, and according to gallery parameter information set by a designer, the invention utilizes attribute rules to automatically analyze and obtain cable tray attributes and cable tray position layout conditions. The cable tray routing layout design usually directly selects the civil engineering wall as the cable tray positioning wall, matches and extracts the civil engineering model data conforming to the same gallery in the SQL database through the attributes of the positioning wall itself, automatically analyzes the cable tray routing layout design combined with the gallery cross-section layout design, and virtually displays the routing information on the three-dimensional layout design platform. If the gallery civil engineering model data is not stored in the SQL database, the cable tray routing can be arranged in a user-defined path mode, and the key point coordinates needs to be captured manually or the coordinate values information needs to be input. The automatic generation of three-dimensional model is to co-ordinate the design rules of cable tray layout, analyze the number of cable tray layers and classification information according to the gallery cross-section layout design and cable tray routing layout design, and automatically select the cable tray components and positioning information, so as to realize the automatic generation of cable tray models in batches by one key, and name and store them according to the cable tray standard specifications. After the establishment of the three-dimensional model of cable tray, the three-dimensional design of support is carried out. According to the gallery cross-section parameter design, the structural dimension information of the support is automatically analyzed, and the type, quantity and location of the layout design are obtained by combining with the automatic analysis of the cable tray routing. Finally, the support model is automatically generated in batches by one key, and named and stored according to the standard specifications of the cable tray support.

As an option, there are two ways to determine the cable tray layout design information of gallery cross-section. First, the cable tray layout design information of gallery cross-section can be automatically acquired according to the electrical cable tray layout rule of the gallery preset in the system or three-dimensional design platform. For example, the electrical cable tray layout rules of the gallery can be manually input. Second, it can receive the cable tray layout design information of gallery cross-section input by an operator after manually analyzing the electrical cable tray layout rule of the gallery, that is, the cable tray layout design information of gallery cross-section can be determined by manual analysis, and then input through the man-machine interactive interface of the three-dimensional design platform/software as shown in FIG. 3, and then the system will make specific analysis on the relevant data/information. Get the attributes that meet the needs of cable tray modeling, such as cable tray classification, naming, etc.

Specifically, the cable tray layout design information of gallery cross-section is the layout of the cable tray of the gallery cross-section, including the number of cable tray layers, the cable tray attribute parameters and positioning of each cable tray layer, etc. Cable tray attribute parameters include but are not limited to cable classification, voltage level, cable tray width, cable tray positioning information, etc. The cable tray positioning information includes a cable tray horizontal positioning parameter and a cable tray vertical positioning parameter, wherein the cable tray horizontal positioning parameter includes a horizontal distance between the cable tray and a wall or a top plate, and the cable tray vertical positioning parameter includes a vertical distance between the cable tray and the wall or the top plate. These attributes have been written into the software for the designer to select. For example, A/B/C/D/N options are provided for the cable classification parameter setting, 1/2/3/4/5/6 options are provided for the voltage level parameter, and 100/200/300/400/500/600 options are available for the cable tray width. Cable tray positioning parameter includes horizontal positioning and vertical positioning. The horizontal positioning is 222 by default, and the vertical positioning is 700 by default. The values can be adjusted according to specific requirements.

The electrical cable tray layout rule of the gallery mainly refers to the relative position (horizontal and vertical distance) between the cable tray and the wall or top plate of the gallery. In a gallery, the cable tray is generally arranged against the wall. After the relative position of each layer of cable tray is determined, it is unchanged in the whole gallery, and the relative distance is given by the design. After the layout of the cable tray of the gallery cross-section is determined, the cable tray classification and cable tray name can be automatically determined, so that the subsequent three-dimensional model of electrical cable tray can be constructed and stored.

Preferably, the cable tray routing layout design module provides two methods to automatically generate a cable tray routing based on the cable tray layout design information of gallery cross-section:

As shown in FIG. 4 and FIG. 6, the first method is to automatically extract the gallery civil engineering model data to complete the cable tray layout design and path planning: extract the gallery civil engineering model data according to the manually selected positioning wall, and automatically generate and display the cable tray routing of each cable tray layer of the gallery according to the gallery civil engineering model data and cable tray positioning information. Specifically, according to the REF number of the manually selected positioning wall, the gallery civil engineering model data of the corresponding gallery pre-stored in the SQL database is searched, the gallery civil engineering model data is extracted, and the cable tray routing of each cable tray layer of the gallery is automatically planned according to the gallery civil engineering model data and the cable tray positioning information. The gallery civil engineering model data includes at least one of unit number, plant, layer, wall REF number, initial clearance center coordinates, orientation, slope, length, end clearance center coordinates, civil engineering standard section type and gallery cross-section dimension parameter set. The REF number is the unique item identifier pre-stored in the PDMS modeling platform.

As shown in FIG. 5 and FIG. 7, the second method is to complete the cable tray layout design routing planning by user-defined path: in the gallery civil engineering model, manually capture the key point coordinates of the gallery civil engineering model and/or manually input the key point coordinates value, and use the auxiliary line to build the virtual cable tray routing of each cable tray layer of the gallery in PDMS according to the key point coordinates and cable tray positioning information. Specifically, the coordinates of the center point of each cable tray layer are automatically determined by using the key point coordinates and the cable tray positioning information, and the cable tray routing of each cable tray layer of the gallery is generated and displayed according to the coordinates of the center point.

This user-defined path method can effectively detect the accuracy of the cable tray layout design routing, and can be extended to other plant cable tray layout design work, which can experience the three-dimensional design process of the gallery electrical cable tray routing more intuitively.

In this embodiment, the cable tray routing is a virtual path constructed through the auxiliary centerline in the PDMS modeling platform, and the accuracy of the cable tray layout design routing can be effectively detected.

In some embodiments, the three-dimensional model generation module generates a three-dimensional model of electrical cable tray of the whole gallery based on the cable tray routing and the cable tray classification. It should be noted that the cable tray classification and cable tray name are determined according to the cable tray layout design information of gallery cross-section or its cable tray attribute parameters. The cable tray classification is used to associate the component library with the three-dimensional model of electrical cable tray, and the component library has cable tray components used to build the three-dimensional model of electrical cable tray. The cable tray components mainly include 90-degree left elbows, 90-degree right elbows, upper and lower connecting pieces, left and right connecting pieces, etc. The cable tray components can refer to the prior art, and are not specifically limited here. Optionally, a first confirmation generation instruction input by an operator is received, and a three-dimensional model of electrical cable tray of the whole gallery is generated according to the cable tray routing and the cable tray classification. Specifically, the first confirmation generation instruction input by the operator is received, the cable tray components required by the cable tray are determined according to the cable tray routing and the cable tray classification, and all the cable tray components are laid and connected along the cable tray routing to generate the three-dimensional model of electrical cable tray of the whole gallery.

After the completion of the layout design of the three-dimensional model of electric cable tray of the gallery, the three-dimensional design of support is required. The three-dimensional model generation module determines the support type and the support structure component according to the cable tray arrangement design information of gallery cross-section and/or the electrical support layout rule. Determine the number of supports and/or location of supports for each support type based on the cable tray model. In the three-dimensional model of electrical cable tray, all the required supports are laid along the routing of the cable tray according to a second confirmation generation instruction input by an operator, so as to automatically generate the three-dimensional model of electrical support of the whole gallery.

It should be noted that the support of the cable tray is mainly composed of steel structure and corbel. The number of corbel is determined according to the number of cable tray layers. The steel structure is the component that supports the corbel and is connected with the civil engineering. Automatically analyzing the type, the quantity and the positioning of a support according to an electrical support layout rule according to a cable tray routing and in combination with gallery cross-section arrangement data; automatically determining the structural dimensions of the support in combination with the support type and the section arrangement data; and finally, quickly generating a three-dimensional model of electrical support in the whole gallery in batches by one key, and automatically naming and storing the support model.

Alternatively, as shown in FIGs. 12 to 16, the support type includes a first support type consisting of a steel structure and at least one layer of corbels, and a second support type consisting of a single layer of corbels. The first support type includes, but is not limited to, supports for rooted side walls, supports for rooted floors, and supports for rooted ceilings, among others. The steel structure is the component that supports the corbel and is connected with the civil engineering of the gallery. The length of square steel and the number of corbels of the support are determined according to the number of cable tray layers. The length of steel for the support of the root floor and ceiling is generally determined automatically according to the civil engineering data, and most of them are arranged at 90 degree turns. According to the electrical support layout rule, when the cable tray spacing-vertical distance is relatively large, the system will automatically divide into two supports, and at this time, the second support type composed of single-layer corbel will be used. Typically, the first stent type is typically provided with one stent every 1.5 M and one stent every 350 MM at the interface. The supports of the second support type may be arranged one by one at a distance of about 1m, which is determined according to specific requirements and specific arrangement rules, and is not specifically limited here.

In some embodiments, the cable tray routing arrangement design module is further configured to determining and displaying the cable tray routing according to the coordinates values of at least one of the starting point, the end point and the turning point of each layer of cable tray manually selected when the arrangement rules of the electric cable trays in a certain section of gallery are not uniform. Wherein the coordinate values of the turning points are obtained by manually shifting a preset distance to the center position of the cable tray and/or are obtained by manual input. Illustratively, as shown in FIG. 17, U, N, E are software coordinates system orientations, e.g., U is UP, N is North, and E is East. In the complex section, the turning point on the center line of each cable tray layer is manually selected. Basically, after the turning point of the wall is selected, it is offset to the center of the cable tray for a certain distance. The coordinates of these points are stored in the system and automatically displayed in the interface with labels. The first digit of the point labeling rule represents a cable tray layer, 1 is not necessarily the first layer, and the latter digits are labeled in order from 1. For example, 11 is the starting point and 16 is the end point. In addition, the cable tray layout design information and cable tray classification of the starting point are obtained as the cable tray attribute of the gallery and the cable tray naming basis. If the tee components need to be arranged, the branch point shall be selected, and the tee position shall be automatically identified and located in combination with the coordinates of the branch point and the cable tray routing.

It should be noted that the manually selected key point is the upper edge point of the wall, and the system will automatically determine the center point coordinates of each cable tray layer according to the selected key point coordinates and the horizontal and vertical distances defined by the section layout (offset by the key point in the horizontal and vertical orientations).A virtual cable tray routing (cable tray routing center line) is generated according to the coordinates of the center points. The turning point manually selected for the special complex section is generally the upper edge point of the wall. Because there is no uniform layout rule, the horizontal and vertical distances defined by the section layout are not used. It is necessary to manually offset the specified distance to the center of the cable tray, or manually input the coordinates values. The label of the key point in the figure is generally composed of two digits. The first digit is 1, which does not necessarily mean the first layer. It is to see which cable tray layer is constructed first. This cable tray layer is displayed on the system first and sorted first.

This embodiment can automatically generate the cable tray routing according to the gallery civil engineering model data and the cable tray layout design information of gallery cross-section, and then automatically generate the three-dimensional model of electric cable tray and the three-dimensional model of electric support of the gallery, and complete the automatic naming and storage of the model respectively, so as to realize the automatic and batch three-dimensional design of the electric cable tray and support. Thereby greatly improving the three-dimensional design efficiency of the gallery cable tray and the support, reducing human errors and improving the design quality.

In another preferred embodiment, the computer readable storage medium of this embodiment stores a computer program, and the computer program is suitable for being loaded by a processor to execute the steps of the three-dimensional automatic design method for gallery electrical cable tray and support.

The computer readable storage medium of the present invention may be various computer readable storage media capable of storing program codes, such as a U disk, a mobile hard disk, a read-only memory (Read-Only Memory, ROM), a magnetic disk or an optical disk.

The embodiment can automatically generate a cable tray routing according to the data of the gallery civil engineering model and the cable tray layout design information of gallery cross-section, further automatically generate the three-dimensional model of electric cable tray and the three-dimensional model of electric support of the gallery, and automatically name and store the models respectively, And that design quality is improve.

In another preferred embodiment, the computer device of this embodiment includes a memory and a processor, wherein the memory stores a computer program, and the processor executes the steps of the method for automatically designing a three-dimensional electrical cable trays and supports in gallery by calling the computer program stored in the memory.

The embodiment can automatically generate a cable tray routing according to the gallery civil engineering model data and the cable tray layout design information of gallery cross-section, further automatically generate the three-dimensional model of electric cable tray and the three-dimensional model of electric support of the gallery, and automatically name and store the models respectively, And that design quality is improve.

The processor of the present invention can be used to provide the calculation and control capability to support the operation of the electrical cable trays and supports of whole gallery three-dimensional design apparatus. In that embodiment of the present application, the processor may be a center process unit (Central Processing Unit, CPU), the processor may also be another general purpose processor, a digital signal processor (Digital Signal Processor, DSP), application specific integrated circuits (Application Specific Integrated Circuit, ASIC), off-the-shelf programmable gate arrays (Field- Programmable Gate Array, FPGA) or other programmable logic device, discrete gate or transistor logic device, discrete hardware components, etc. Where the general purpose processor may be a microprocessor or the processor may be any conventional processor or the like.

Those skilled in the art will further appreciate that the elements and algorithm steps of the various examples described in connection with the embodiments disclosed herein can be implemented as electronic hardware, computer software, or a combination of both, and that the components and steps of the various examples have been described generally in terms of function in the foregoing description for the purpose of clearly illustrating the interchangeability of hardware and software. Whether these functions are implemented in hardware or software depends on the specific application and design constraints of the technical solution. Skilled artisans may implement the described functionality using different methods for each particular application, but such implementations should not be construed as exceeding the scope of the invention.

The steps of a method or algorithm described in connection with the embodiments disclosed herein may be embodied directly in hardware, in a software module executed by a processor, or in a combination of the two. The software module may be placed in a random access memory (RAM), a memory, a read only memory (ROM), an electrically programmable ROM, an electrically erasable programmable ROM, a register, a hard disk, a removable disk, a CD-ROM, or any other form of storage medium known in the art.

It can be understood that the above embodiments only represent the preferred embodiments of the present invention, and the description is more specific and detailed, but it should not be understood as a limitation to the patent scope of the present invention; It should be noted that, for those of ordinary skill in the art, the above technical features can be freely combined, and several modifications and improvements can be made without departing from the concept of the present invention, which all fall within the scope of protection of the present invention; Accordingly, it is intended that all changes and modifications which come within the scope of the appended claims shall be construed accordingly.

## Claims

1. A three-dimensional automatic design method for electrical cable trays and supports in gallery, wherein comprising the following steps:
S20, determining cable tray layout design information of gallery cross-section;
S30, obtaining gallery civil engineering model data, and automatically generating and displaying a cable tray routing based on the gallery civil engineering model data and the cable tray layout design information of gallery cross-section;
S40, automatically generating a three-dimensional model of electrical cable tray of the gallery according to the cable tray layout design information of gallery cross-section and the cable tray routing;
S50, automatically generating a three-dimensional model of electrical support of the gallery based on the cable tray layout design information of gallery cross-section and the three-dimensional model of electrical cable tray;
S60, automatically naming and storing the three-dimensional model of electrical cable tray and the three-dimensional model of electrical support according to a first preset naming rule.

2. The three-dimensional automatic design method for electrical cable trays and supports in gallery according to claim 1, wherein before step S20, the method further comprises:
S10, obtaining and displaying a gallery civil engineering model of nuclear power plant by using a PDMS modeling platform.

3. The three-dimensional automatic design method for electrical cable trays and supports in gallery according to claim 1, wherein the step S20 comprises:
acquiring the cable tray layout design information of gallery cross-section according to a preset electrical cable tray layout rule of the gallery.

4. The three-dimensional automatic design method for electrical cable trays and supports in gallery according to claim 1, wherein the step S20 comprises:
receiving the cable tray arrangement design information of gallery cross-section input by an operator after manually analysis of electrical cable tray layout rule of the gallery.

5. The three-dimensional automatic design method for electrical cable trays and supports in gallery according to claim 1, wherein the cable tray layout design information of gallery cross-section comprises the number of cable tray layers and/or the cable tray attribute parameters of each cable tray layer, wherein the cable tray attribute parameters comprise at least one of cable classification, voltage level, cable tray width, and cable tray positioning information.

6. The three-dimensional automatic design method for electrical cable trays and supports in gallery according to claim 5, wherein the method comprises:
determining cable tray classification and cable tray name according to the cable tray attribute parameters;
wherein the cable tray classification is used to associate a component library with the three-dimensional model of electrical cable tray, and the component library has cable tray components for building the three-dimensional model of electrical cable tray.

7. The three-dimensional automatic design method for electrical cable trays and supports in gallery according to claim 6, wherein the step S40 comprises:
S41, receiving a first confirmation generation instruction input by an operator, and automatically generating a three-dimensional model of electrical cable tray of the whole gallery according to the cable tray routing and the cable tray classification.

8. The three-dimensional automatic design method for electrical cable trays and supports in gallery according to claim 5, wherein the step S30 comprises:
S31, searching for the gallery civil engineering model data pre-stored in the SQL database corresponding to the gallery according to the REF number of a manually selected positioning wall, extracting the gallery civil engineering model data, and automatically generating and displaying the cable tray routing of each cable tray layer of gallery according to the gallery civil engineering model data and the cable tray positioning information; the cable tray routing is a virtual path constructed through an auxiliary centerline in a PDMS modeling platform;
the gallery civil engineering model data comprises at least one of unit number, plant, layer position, wall REF number, starting clear-space center coordinates, orientation, slope, length, ending clear-space center coordinates, civil standard section type and gallery cross-section dimension parameter sets, wherein the REF number is a unique item identifier pre-stored in the PDMS modeling platform.

9. The three-dimensional automatic design method for electrical cable trays and supports in gallery according to claim 5, wherein the step S30 comprises:
S32, manually capturing the key point coordinates of the gallery civil engineering and/or manually inputting the value of the key point coordinate, automatically generating and displaying a cable tray routing of each cable tray layer of gallery according to key point coordinates and the cable tray positioning information, wherein the cable tray routing is a virtual path constructed through an auxiliary centerline in a PDMS modeling platform.

10. The three-dimensional automatic design method for electrical cable trays and supports in gallery according to claim 9, wherein the step of automatically generating and displaying a cable tray routing of each layer of gallery cable tray according to key point coordinates and the cable tray positioning information further comprises:
automatically determining center point coordinates of each cable tray layer by using the key point coordinates and the cable tray positioning information, and generating and displaying a cable tray routing of each cable tray layer of the gallery according to the center point coordinates.

11. The three-dimensional automatic design method for electrical cable trays and supports in gallery according to claim 1, wherein the step S50 comprises:
S51, determining support type and support structure dimension according to the cable tray layout design information of gallery cross-section;
S52, determining support quantity and/or the support positioning positions of each support type according to the three-dimensional model of electrical cable tray;
S53, in the three-dimensional model of electrical cable tray, according to a second confirmation generation instruction input by an operator, deploying all required supports along the cable tray routing to automatically generate a three-dimensional model of electrical support of the whole gallery.

12. The three-dimensional automatic design method for electrical cable trays and supports in gallery according to claim 1, wherein a gallery comprises a plurality of gallery segments, and the method further comprise the following steps:
S70, when the layout rules of electrical cable tray in a gallery segment are not uniform, determining and displaying the cable tray routing according to the coordinates values of at least one of a starting point, an end point and a turning point manually selected of each cable tray layer, wherein the coordinates value of the turning point is obtained by manually shifting a preset distance to the center position of cable tray and/or is obtained by manual input;
S80, obtaining cable tray layout design information and cable tray classification of the starting point to be used as the cable tray attribute of the gallery segment and the cable tray naming basis.

13. A three-dimensional automatic design apparatus for gallery electrical cable tray and support, comprising:
a gallery cross-section cable tray layout design module is configured to determine cable tray layout design information of gallery cross-section;
a cable tray routing layout design module is configured to obtain gallery civil engineering model data and automatically generate and display the cable tray routing based on the gallery civil engineering model data and the cable tray layout design information of gallery cross-section;
and a three-dimensional model generation module is configured to automatically generate an three-dimensional model of electrical cable tray of the gallery according to the cable tray layout design information of gallery cross-section and the cable tray routing, automatically generate an three-dimensional model of electrical support of the gallery based on the cable tray layout design information of gallery cross-section and the three-dimensional model of electrical cable tray, and automatically name and store the three-dimensional model of electrical cable tray and the three-dimensional model of electrical support according to a first preset naming rule.

14. A computer readable storage medium, wherein the computer readable storage medium stores a computer program and the computer program is suitable for being loaded by a processor to execute the steps of the three-dimensional automatic design method for electrical cable trays and supports in gallery according to any one of claims 1 to 12.

15. A computer device, comprising a memory and a processor, wherein the memory stores a computer program, and the processor executes the steps of the three-dimensional automatic design method for electrical cable trays and supports in gallery according to any one of claims 1 to 12 by calling the computer program stored in the memory.
